# EUROPEAN PATENT APPLICATION

(11) **EP 4 576 375 A1**
(43) Date of publication of application: **25.06.2025**
(21) Application number: 23868537.4
(22) Date of filing: 18.09.2023
(51) Int. Cl.: H01M 50/342, H01M 50/24, H01M 50/209

(54) **BATTERY PACK, AND ENERGY STORAGE SYSTEM INCLUDING SAME**

(30) Priority: 19.09.2022 KR 20220118128
(71) Applicant: LG Energy Solution, Ltd., Seoul 07335 (KR)
(72) Inventor: HONG, Seok-Hyun, Daejeon 34122 (KR); LEE, Jae-Ki, Daejeon 34122 (KR); JEONG, Gyeong-Su, Daejeon 34122 (KR)
(74) Representative: Plasseraud IP
(86) International application number: PCT/KR2023/014092
(87) International publication number: WO 2024/063485

(57) **Abstract**

Disclosed are a battery pack configured to guide venting gas to be discharged in a desired direction when a thermal event occurs, and an energy storage system including the same.

A battery pack according to one aspect of the present disclosure includes a cell assembly, a pack frame accommodating the cell assembly therein, and a venting guidance portion coupled to the pack frame and configured to cause an outlet, through which venting gas emitted from the cell assembly is discharged to the outside of the pack frame, to be formed at a coupling portion with the pack frame, which is at least partially weakened as the internal pressure of the pack frame increases due to the venting gas.

## Description

### TECHNICAL FIELD

The present disclosure relates to a battery pack and an energy storage system including the same, and more specifically, it relates to a battery pack with enhanced stability and an energy storage system including the same.

The present application claims priority to Korean Patent Application No. 10-2022-0118128 filed on September 19, 2022 in the Republic of Korea, the disclosures of which are incorporated herein by reference.

### BACKGROUND ART

Recently, the demand for portable electronic products such as laptops, video cameras, and portable phones has rapidly increased, and the development of electric vehicles, energy storage batteries, robots, satellites, and the like has been accelerated, so in line with this, active research on high-performance secondary batteries capable of being repeated charged and discharged is underway.

Currently commercialized secondary batteries include nickel cadmium batteries, nickel hydrogen batteries, nickel zinc batteries, and lithium secondary batteries. Among these, lithium secondary batteries are in the spotlight for their advantages of free charging and discharging, a very low self-discharge rate, and high energy density as they have almost no memory effect, compared to nickel-based secondary batteries.

These lithium secondary batteries mainly use lithium-based oxides and carbon materials as positive and negative electrode active materials, respectively. In addition, the lithium secondary batteries include positive and negative electrode plates coated with the positive and negative electrode active materials, respectively, an electrode assembly in which the positive and negative electrode plates are disposed with a separator therebetween, and an exterior case that seals and stores the electrode assembly with an electrolyte.

Meanwhile, lithium secondary batteries may be classified, depending on the shape of a battery case, into can-type secondary batteries in which the electrode assembly is accommodated in a metal can and pouch-type secondary batteries in which the electrode assembly is accommodated in a pouch of an aluminum laminate sheet. In addition, can-type secondary batteries may be further classified into cylindrical batteries and prismatic batteries depending on the shape of the metal can.

Here, the pouch of the pouch-type secondary battery may be roughly divided into a lower sheet and an upper sheet covering the same. In this case, the pouch accommodates an electrode assembly obtained by laminating and winding a positive electrode, a negative electrode, and a separator. Then, after storing the electrode assembly, the edges of the upper and lower sheets are sealed by heat fusion or the like. Additionally, an electrode tab extending from each electrode may be coupled to an electrode lead, and an insulating film may be added to the portion where the electrode lead is in contact with the sealing portion.

As described above, the pouch-type secondary battery may have the flexibility to be configured in various forms. In addition, the pouch-type secondary battery has the advantage of implementing a secondary battery of the same capacity with a smaller volume and mass.

These lithium secondary batteries are increasingly applied to various fields, such as energy storage systems (ESSs) and the like. The lithium secondary batteries are used as a cell module or battery pack obtained by overlapping or stacking multiple battery cells on each other or in a cartridge into a dense structure to provide high voltage and high current and then electrically connecting the same.

One of the most important issues in the battery pack configuration is safety. In particular, if a thermal event occurs in any one of a plurality of battery cells included in the battery pack, propagation of the event to other battery cells needs to be suppressed. If thermal propagation between the battery cells is not appropriately suppressed, this may cause thermal events in several battery cells included in the battery pack, resulting in larger problems such as ignition or explosion of the battery pack. Moreover, the ignition or explosion occurring in the battery pack may cause significant damage to people or property in the surrounding area. Therefore, the battery pack requires a configuration capable of appropriately controlling the above-mentioned thermal events.

Additionally, in the battery pack, high-temperature and high-pressure venting gas may be generated inside the battery cell where a thermal event occurs. If the venting gas is randomly discharged from a pack case of the battery pack accommodating the battery cells, the joint (e.g., where a sealing portion or the like is provided) of the pack case with a low melting point may be damaged first. In this case, oxygen may flow into the pack case through the damaged joints of the plurality of pack cases. In this case, fire is more likely to break out inside the battery pack.

### DISCLOSURE

### Technical Problem

The present disclosure has been designed to solve the problems of the related art, and therefore the present disclosure is directed to providing a battery pack that is configured to guide venting gas to be discharged in a desired direction when a thermal event occurs, and an energy storage system including the same.

However, the technical problems that the present disclosure seeks to solve are not limited to the above-mentioned problems, and other problems not mentioned may be clearly understood by those skilled in the art from the description of the invention described below.

### Technical Solution

In one aspect of the present disclosure, there is provided a battery pack including a cell assembly, a pack frame configured to accommodate the cell assembly therein, and a venting guidance portion coupled to the pack frame and configured to cause an outlet, through which venting gas emitted from the cell assembly is discharged to the outside of the pack frame, to be formed at a coupling portion with the pack frame, which is at least partially weakened as the internal pressure of the pack frame increases due to the venting gas.

Preferably, the venting guidance portion may be configured to cause the pack frame to open outwards as the internal pressure of the pack frame increases.

Preferably, the venting guidance portion may be configured to cause the space between the cell assembly and the pack frame to become wider toward one side thereof when the pack frame opens outwards as the internal pressure of the pack frame increases.

Preferably, the venting guidance portion may be disposed between the pack frame and the cell assembly.

Preferably, the venting guidance portion may be configured to be located on at least one of both sides of the cell assembly between the pack frame and the cell assembly.

Preferably, the bonding force between one side of the venting guidance portion and the pack frame may be configured to be less than the bonding force between the other side of the venting guidance portion and the pack frame, and the venting guidance portion may be configured to cause the outlet to be formed between one side of the venting guidance portion and the pack frame as the internal pressure of the pack frame increases.

Preferably, the pack frame may further include a support configured to support one side of the venting guidance portion on the opposite side of the inner surface of the pack frame facing the cell assembly.

Preferably, the venting guidance portion may include a body coupled to the support and a flange extending from both sides of the body and coupled to the inner surface of the pack frame, and the flange may include a first portion extending from one side of the body and a second portion extending from the other side of the body, and the flange on one side of the venting guidance portion may be configured such that the first portion is coupled to the inner surface of the pack frame and such that the second portion is not coupled to the inner surface of the pack frame.

Preferably, the second portion may be configured to be located closer to the cell assembly than the first portion.

Preferably, the battery pack may further include a sealing member configured to seal the gap between the top and the side of the pack frame and the gap between the bottom and the side of the pack frame, and the sealing member may be disposed to be spaced apart from the venting guidance portion in the vertical direction in the pack frame.

Preferably, a portion of the pack frame facing the cell assembly may be thinner than other portions.

**In** addition, an energy storage system according to another aspect of the present disclosure includes at least one battery pack according to one aspect of the present disclosure.

### Advantageous Effects

According to an embodiment of the present disclosure, it is possible to prevent venting gas from being randomly discharged to the outside of the pack frame by configuring a structurally vulnerable portion in a portion where the pack frame and the venting guidance portion are coupled. Accordingly, it is possible to prevent oxygen from entering the pack frame, as well as to guide the venting gas to be discharged in a specific direction.

In addition, according to the embodiment of the present disclosure, since a venting passage is configured to be inclined toward one side when the internal pressure of the pack frame increases, the venting gas may be more easily guided to be discharged in a specific direction.

Additionally, according to the embodiment of the present disclosure, the discharge of venting gas toward the sealing member may be minimized in the event of thermal runaway of the cell assembly. Accordingly, it is possible to minimize damage to the sealing member due to the venting gas and minimize oxygen inflow through the gap between pack frames.

In addition, various other additional effects may be obtained by various embodiments of the present disclosure. These various effects of the present disclosure will be explained in detail in respective embodiments, or descriptions of effects that may be easily understood by those skilled in the art will be omitted.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a diagram illustrating a battery pack according to an embodiment of the present disclosure.
FIG. 2 is a partially exploded perspective view of the battery pack in FIG. 1.
FIG. 3 is a cross-sectional view taken along line A-A' in FIG. 1.
FIG. 4 is a cross-sectional view taken along line B-B' in FIG. 1.
FIG. 5 is a diagram illustrating a venting guidance portion provided in the battery pack in FIG. 1.
FIG. 6 is a diagram illustrating the states before and after thermal runaway of a cell assembly in the battery pack in FIG. 1.
FIG. 7 is a diagram illustrating a state in which venting gas is discharged from the battery pack in FIG. 1.
FIG. 8 is an enlarged view of area C in FIG. 2.
FIG. 9 is an enlarged view of area D in FIG. 2.
FIG. 10 is a diagram illustrating a battery pack according to another embodiment of the present disclosure.
FIG. 11 is a diagram illustrating a battery pack according to another embodiment of
the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configuration proposed in the embodiments and drawings of this specification is only the most preferable embodiment of the present disclosure and does not represent all technical ideas of the present disclosure, so it should be understood that various equivalents and modifications could be made thereto at the time of filing the application.

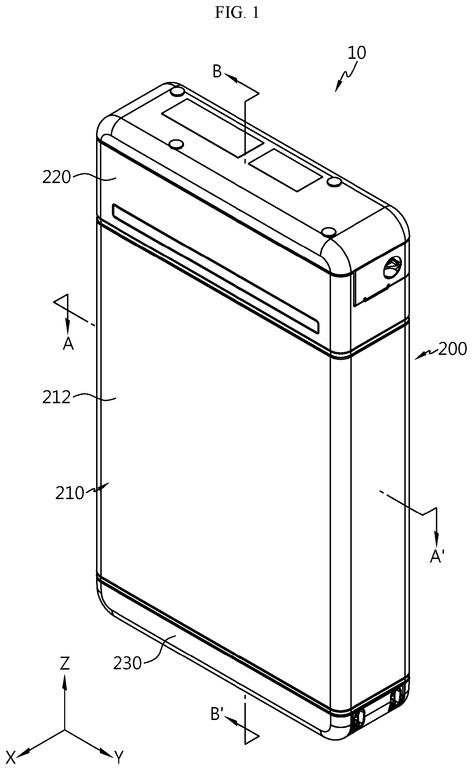

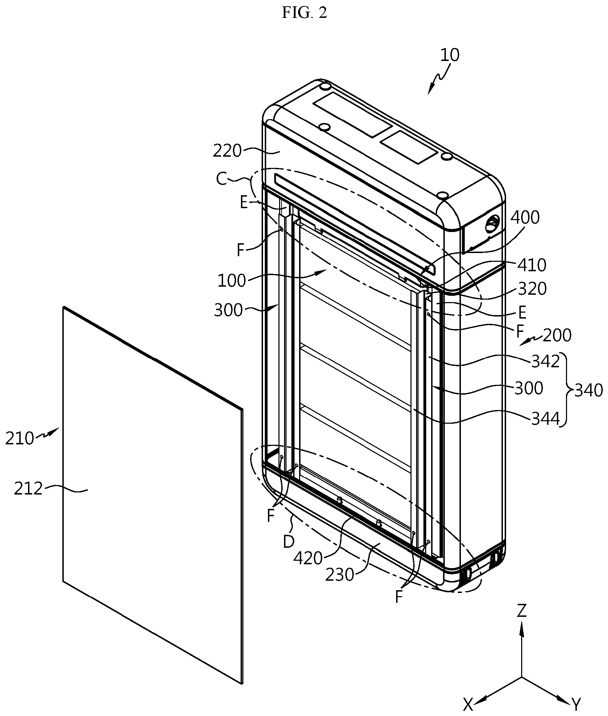

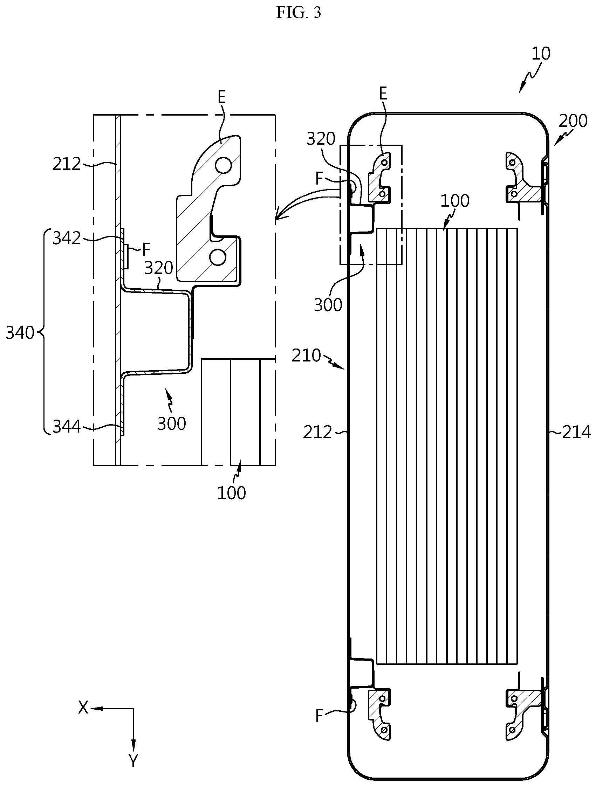

FIG. 1 is a diagram illustrating a battery pack 10 according to an embodiment of the present disclosure, FIG. 2 is a partially exploded perspective view of the battery pack 10 in FIG. 1, and FIG. 3 is a cross-sectional view taken along line A-A' in FIG. 1 (specifically, FIG. 3 is a cross-sectional view of the battery pack 10 taken along line A-A' on the XY plane in FIG. 1).

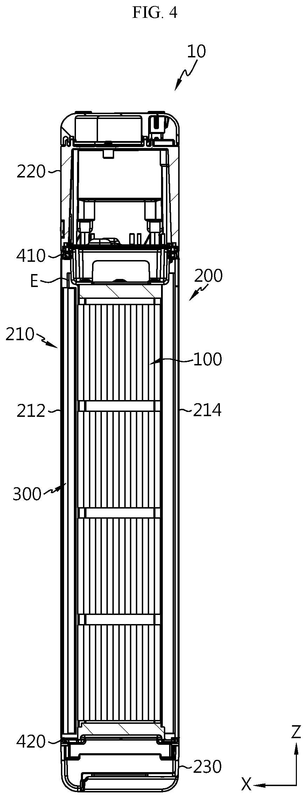

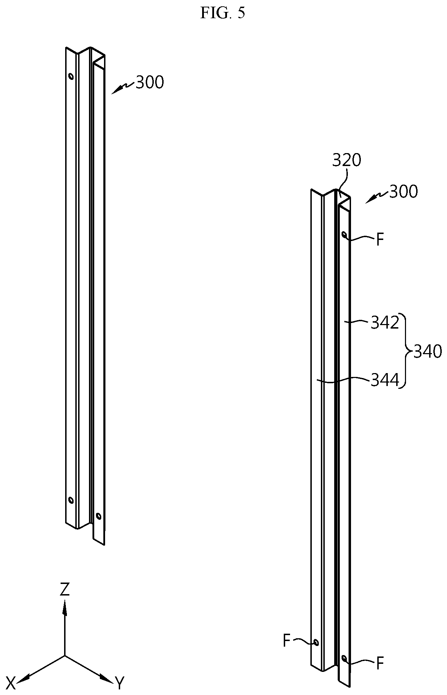

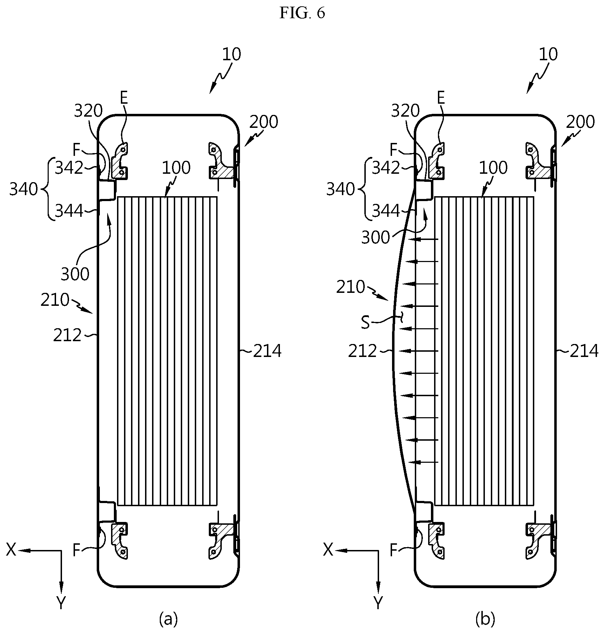

In addition, FIG. 4 is a cross-sectional view taken along line B-B' in FIG. 1 (specifically, FIG. 4 is a cross-sectional view of the battery pack 10 taken along line B-B' on the XZ plane in FIG. 1), FIG. 5 is a diagram illustrating a venting guidance portion 300 provided in the battery pack 10 in FIG. 1, and FIG. 6 is a diagram illustrating the states before and after thermal runaway of a cell assembly 100 in the battery pack 10 in FIG. 1. Here, in FIG. 6, FIG. 6(a) is a diagram illustrating the state of the battery pack 10 before thermal runaway of the cell assembly 100, and FIG. 6(b) is a diagram illustrating the state of the battery pack 10 after thermal runaway of the cell assembly 100.

**In** the embodiment of the present disclosure, the X-axis direction shown in the drawing may indicate the front/back direction of the battery pack 10, the Y-axis direction may indicate the left/right direction of the battery pack 10, which is perpendicular to the X-axis direction on the horizontal plane (XY plane), and the Z-axis direction may indicate the up/down direction perpendicular to both the X-axis direction and the Y-axis direction.

Referring to FIGS. 1 to 6, the battery pack 10 according to an embodiment of the present disclosure may include a cell assembly 100, a pack frame 200, and a venting guidance portion 300.

The cell assembly 100 may include at least one battery cell. Here, the battery cell may indicate a secondary battery. This battery cell may be provided as a pouch-type battery cell, a cylindrical battery cell, or a prismatic battery cell.

The pack frame 200 may accommodate the cell assembly 100 therein. That is, the pack frame 200 may include an accommodation space for accommodating the cell assembly 100 therein. For example, the pack frame 200 may include a material with high heat resistance and rigidity.

The venting guidance portion 300 may be coupled to the pack frame 200 and configured to cause an outlet S, through which venting gas from the cell assembly 100 is discharged to the outside of the pack frame 200, to be formed.

In a typical battery pack, an event such as thermal runaway may occur in at least some of the battery cells. In this case, high-temperature and high-pressure venting gas may be generated inside the battery cell where the thermal event occurred. If the venting gas is randomly discharged from the pack frame accommodating the battery cells, oxygen may flow into the pack frame through a portion of the pack frame where the internal pressure is lowered by the discharge of the venting gas. In this case, fire may be more likely to break out inside the battery pack.

To solve this problem, the venting guidance portion 300 of the present disclosure may be configured such that a coupling portion thereof with the pack frame 200 is at least partially weakened as the internal pressure of the pack frame 200 increases due to the venting gas discharged from the cell assembly 100. Accordingly, if the internal pressure of the pack frame 200 increases due to venting gas, the venting guidance portion 300 may be configured to cause an outlet S, through which the venting gas is discharged to the outside of the pack frame 200, to be formed.

That is, the venting guidance portion 300 may configure a structurally vulnerable portion at the joint where it is coupled to the pack frame 200, thereby inducing the flow of venting gas to be concentrated on the vulnerable portion if the internal pressure of the pack frame 200 increases due to the venting gas. In this case, the aforementioned outlet S may be formed in the structurally vulnerable portion when the internal pressure of the pack frame 200 increases due to venting gas. Meanwhile, if high-pressure venting gas is discharged to the outside of the pack frame 200 through the outlet S, oxygen may be prevented from flowing into the pack frame 200 through the outlet S by the discharge pressure of venting gas.

According to this embodiment of the present disclosure, it is possible to prevent venting gas from being randomly discharged to the outside of the pack frame 200 by providing a structurally vulnerable portion at the joint where the pack frame 200 and the venting guidance portion 300 are coupled. Accordingly, it is possible to prevent the inflow of oxygen into the pack frame 200, as well as to guide the venting gas to be discharged in a specific direction.

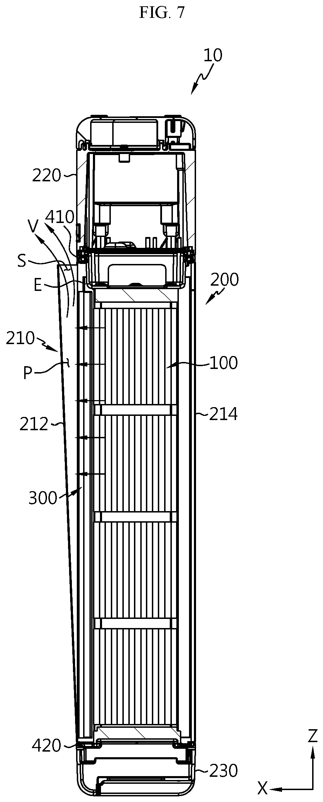

FIG. 7 is a diagram illustrating a state in which venting gas is discharged from the battery pack 10 in FIG. 1. Here, venting gas is indicated by the reference symbol "V" in FIG. 7.

Referring to FIG. 7, the venting guidance portion 300 may be configured to cause the pack frame 200 to open outwards as the internal pressure of the pack frame 200 increases.

For example, the venting guidance portion 300 may configure the vulnerable portion described above to cause an outlet S, through which venting gas is discharged, to be formed in the vulnerable portion when the internal pressure of the pack frame 200 increases due to venting gas. In this case, the pack frame 200 may open outwards in the vulnerable portion to facilitate the formation of the outlet S for discharging venting gas.

According to this embodiment, when the internal pressure of the pack frame 200 increases, the pack frame 200 may open outwards to form an outlet S for discharging venting gas, thereby quickly discharging the venting gas through a larger area than a hole-shaped outlet.

In particular, the venting guidance portion 300 may be configured such that when the pack frame 200 opens outwards as the internal pressure of the pack frame 200 increases, the space between the cell assembly 100 and the pack frame 200 gradually increases as it is closer to one side.

For example, the structurally vulnerable portion at the joint where the venting guidance portion 300 is coupled to the pack frame 200 may be located on one side of the pack frame 200 (e.g., the upper side of the pack frame 200). In this case, if the internal pressure of the pack frame 200 increases, the gap between the venting guidance portion 300 and the pack frame 200 may widen on one side of the pack frame 200, so that the outlet S described above may be formed on one side of the pack frame 200. On the other hand, the venting guidance portion 300 and the pack frame 200 may remain coupled to each other on the other side of the pack frame 200 (e.g., the lower side of the pack frame 200) where the vulnerable portion is not provided.

Accordingly, the space between the cell assembly 100 and the pack frame 200 may become wider toward one side of the pack frame 200. In other words, a venting passage P, through which venting gas is discharged when the internal pressure of the pack frame 200 increases, may be configured to become wider toward one side of the pack frame 200.

According to this embodiment, if the internal pressure of the pack frame 200 increases, the venting passage P may be formed to be inclined toward one side thereof, thereby more easily guiding the venting gas to be discharged in a specific direction.

Referring back to FIGS. 2 to 6, the venting guidance portion 300 may be disposed between the pack frame 200 and the cell assembly 100.

Accordingly, the stress applied to the pack frame 200 by the discharge pressure of venting gas may be concentrated on the area facing the cell assembly 100. In this case, the stress is applied to the pack frame 200 due to the discharge pressure of venting gas applied to the pack frame 200, so that the gap between the venting guidance portion 300 and the pack frame 200 may more easily widen in the aforementioned vulnerable portion.

According to this embodiment, the outlet S may be easily formed in the pack frame 200 by the discharge pressure of venting gas generated due to thermal runaway of the cell assembly 100.

Meanwhile, the pack frame 200 described above may include side plates 210, an upper plate 220, and a lower plate 230.

The side plates 210 may constitute the side surfaces of the pack frame 200. In this case, the venting guidance portion 300 may be coupled to the side plate 210 so as to be disposed between the side plate 210 and the cell assembly 100. In this case, the stress due to the discharge pressure of venting gas may be concentrated on the side plate 210.

Specifically, the side plates 210 may include a front plate 212 and a rear plate 214.

The front plate 212 may constitute the front surface of the pack frame 200.

The rear plate 214 may constitute the rear surface of the pack frame 200.

According to the embodiment of the present disclosure, in the case where the battery pack 10 is in close contact with the wall in the installation space depending on the installation environment, the above-described venting guidance portion 300 may be configured to be coupled to the front inner surface of the pack frame 200. For example, as shown in FIGS. 2 to 7, the venting guidance portion 300 may be coupled to the inner surface of the front plate 212, and the rear plate 214 may be in close contact with the wall of the installation space.

Meanwhile, although not shown, the above-described venting guidance portion 300 may be coupled to the inner surface of the rear plate 214. In this case, the front plate 212 may be in close contact with the wall of the installation space.

The upper plate 220 may be configured to cover the top of the cell assembly 100. The upper plate 220 may be connected to the upper end of the side plate 210.

The lower plate 230 may be configured to cover the bottom of the cell assembly 100. The lower plate 230 may be connected to the lower end of the side plate 210.

In particular, the venting guidance portion 300 may be configured to be located on at least one of both sides of the cell assembly 100 between the pack frame 200 and the cell assembly 100.

Accordingly, the stress applied to the pack frame 200 by the discharge pressure of venting gas may be concentrated on approximately the entire area of the pack frame 200 facing the cell assembly 100.

In this case, the gap between the venting guidance portion 300 and the pack frame 200 may open in the vulnerable portion of the venting guidance portion 300 located on at least one side of the cell assembly 100 by the discharge pressure of venting gas applied to the pack frame 200.

According to this embodiment, when the internal pressure of the pack frame 200 increases, the outlet S for discharging venting gas may be configured wider, thereby more quickly discharging the venting gas to the outside.

Referring again to FIGS. 2 to 7, the bonding force between one side of the venting guidance portion 300 (e.g., the upper area of the venting guidance portion 300) and the pack frame 200 may be configured to be less than the bonding force between the other side of the venting guidance portion 300 (e.g., the lower area of the venting guidance portion 300) and the pack frame 200. In addition, the venting guidance portion 300 may be configured to cause an outlet S to be formed between one side of the venting guidance portion 300 and the pack frame 200 as the internal pressure of the pack frame 200 increases.

That is, the structurally vulnerable portion at the joint where the venting guidance portion 300 is coupled to the pack frame 200 may be located on one side of the venting guidance portion 300. In this case, when the internal pressure of the pack frame 200 increases, the gap between one side of the venting guidance portion 300 and the pack frame 200 may open to form the above-described outlet S on one side of the pack frame 200. Meanwhile, even if the internal pressure of the pack frame 200 increases, the coupling between the other side of the venting guidance portion 300 and the pack frame 200 may be maintained.

Accordingly, the space between the cell assembly 100 and the pack frame 200 may become wider toward one side of the pack frame 200. In other words, the venting passage P, through which venting gas is discharged when the internal pressure of the pack frame 200 increases, may be configured to become wider toward one side of the pack frame 200.

According to this embodiment, since the venting passage P is configured to be inclined toward one side thereof when the internal pressure of the pack frame 200 increases, the venting gas may be more easily guided to be discharged in a specific direction.

In particular, the pack frame 200 may further include a support E.

The support E may be configured to support one side of the venting guidance portion 300 on the opposite side of the inner surface of the pack frame 200 facing the cell assembly 100. For example, the support E and the venting guidance portion 300 may be coupled by bolting, etc., but the coupling is not limited thereto. Additionally, the support E may connect the above-described upper plate 220 and lower plate 230.

That is, since one side of the venting guidance portion 300 (the side of the venting guidance portion 300 opposite the portion coupled to the inner surface of the pack frame 200) is stably supported by the support E, the gap between one side of the venting guidance portion 300 and the pack frame 200 may more easily widen by the discharge pressure of venting gas when the internal pressure of the pack frame 200 increases.

According to this embodiment, the outlet S may be formed more easily in the pack frame 200 by the discharge pressure of venting gas generated due to thermal runaway of the cell assembly 100.

Hereinafter, the venting guidance portion 300 will be described in more detail.

Referring back to FIGS. 2 to 7, the venting guidance portion 300 may include a body 320 and a flange 340.

The body 320 may be coupled to the support E. The portion where the body 320 is coupled to the support E may be on the opposite side of the portion where the venting guidance portion 300 is coupled to the inner surface of the pack frame 200. Additionally, the body 320 may be formed to extend long in the vertical direction.

The flange 340 may extend from both sides of the body 320 and may be coupled to the inner surface of the pack frame 200. In addition, the flange 340 may be formed to extend long in the vertical direction.

The flange 340 may include a first portion 342 and a second portion 344.

The first portion 342 may extend from one side of the body 320.

The second portion 344 may extend from the other side of the body 320.

In this case, the flange 340 may be configured on one side of the venting guidance portion 300 (e.g., the upper area of the venting guidance portion 300) such that the first portion 342 is coupled to the inner surface of the pack frame 200 and such that the second portion 344 is not coupled to the inner surface of the pack frame 200. For example, the first portion 342 of the flange 340 may be coupled to the inner surface of the pack frame 200 by a fastening member F (e.g., bolts) on one side of the venting guidance portion 300.

Meanwhile, the flange 340 may be configured on the other side of the venting guidance portion 300 (e.g., the lower area of the venting guidance portion 300) such that both the first portion 342 and the second portion 344 are coupled to the inner surface of the pack frame 200. For example, the first portion 342 and the second portion 344 of the flange 340 may be coupled to the inner surface of the pack frame 200 by a fastening member F on the other side of the venting guidance portion 300.

In this case, the structurally vulnerable portion at the joint where the venting guidance portion 300 is coupled to the pack frame 200 may be formed on one side of the venting guidance portion 300 as described above. Specifically, since a portion (second portion 344) of the flange 340 is not coupled to the inner surface of the pack frame 200 on one side of the venting guidance portion 300, the gap between one side of the venting guidance portion 300 and the pack frame 200 may open by the discharge pressure of venting gas when the internal pressure of the pack frame 200 increases, thereby forming the outlet S described above on one side of the pack frame 200. Meanwhile, even when the internal pressure of the pack frame 200 increases, the coupling between the other side of the venting guidance portion 300 and the pack frame 200 may be maintained.

According to this embodiment, since the venting passage P is more easily configured to be inclined toward one side thereof when the internal pressure of the pack frame 200 increases, the venting gas may be more easily guided to be discharged in a specific direction.

In particular, the second portion 344 may be configured to be located closer to the cell assembly 100 than the first portion 342.

Specifically, the second portion 344 may be located between the cell assembly 100, which emits venting gas during thermal runaway, and the inner surface of the pack frame 200.

That is, the discharge pressure of venting gas may be applied to a portion (second portion 344) of the flange 340 that is not coupled to the pack frame 200 on one side of the venting guidance portion 300. In addition, on one side of the venting guidance portion 300, a portion (first portion 342) of the flange 340 coupled to the inner surface of the pack frame 200 may be disposed farther from the cell assembly 100 than the portion of the flange 340 that is not coupled to the pack frame 200.

According to this embodiment, on one side of the venting guidance portion 300, while a portion (first portion 342) of the venting guidance portion 300 partially maintains the coupling between the venting guidance portion 300 and the pack frame 200, the outlet S may be formed in a portion (second portion 344) where the venting guidance portion 300 and the pack frame 200 are not coupled in the portion where the pack frame 200 faces the cell assembly 100. Accordingly, it is possible to easily form the outlet S for discharging venting gas while preventing the inner surface of the pack frame 200 from being completely separated from the battery pack 10 on one side of the venting guidance portion 300.

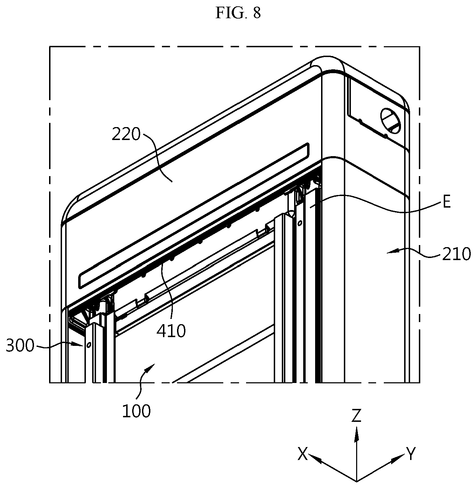

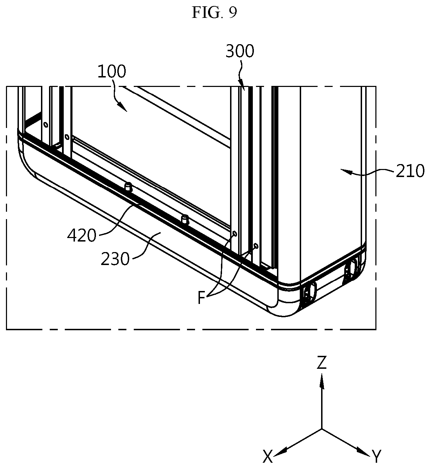

FIG. 8 is an enlarged view of area C in FIG. 2, and FIG. 9 is an enlarged view of area D in FIG. 2.

Referring to FIGS. 2, 4, and 6 to 9, the battery pack 10 may further include a sealing member 400.

The sealing member 400 may be configured to seal the gap between the top and the side of the pack frame 200 and the gap between the bottom and the side of the pack frame 200.

In this case, the sealing member 400 may be disposed to be spaced apart from the venting guidance portion 300 in the vertical direction in the pack frame 200.

In an embodiment, the sealing member 400 may include a first sealing portion 410 and a second sealing portion 420.

The first sealing portion 410 may be configured to seal the gap between the side plate 210 and the upper plate 220. For example, the first sealing portion 410 may be disposed to be spaced apart from one side of the venting guidance portion 300 (e.g., the upper area of the venting guidance portion 300) in the vertical direction.

The second sealing portion 420 may be configured to seal the gap between the side plate 210 and the lower plate 230. For example, the second sealing portion 420 may be disposed to be spaced apart from the other side of the venting guidance portion 300 (e.g., the lower area of the venting guidance portion 300) in the vertical direction.

Meanwhile, during thermal runaway of the cell assembly 100, venting gas may be discharged to the outside through the outlet S formed between one side of the venting guidance portion 300 and the pack frame 200. At this time, since the sealing member 400 is disposed to be spaced apart from one side of the venting guidance portion 300 in the vertical direction, the gas may be discharged while being spaced vertically from the outlet S in the case of thermal runaway of the cell assembly 100. In particular, when the internal pressure of the cell assembly 100 increases, the pack frame 200 may open outwards, thereby minimizing the discharge of venting gas toward the sealing member 400.

According to this embodiment, the discharge of venting gas toward the sealing member 400 may be minimized in the event of thermal runaway of the cell assembly 100. Accordingly, it is possible to minimize damage to the sealing member 400 due to venting gas and minimize the inflow of oxygen through the gap of the pack frame 200.

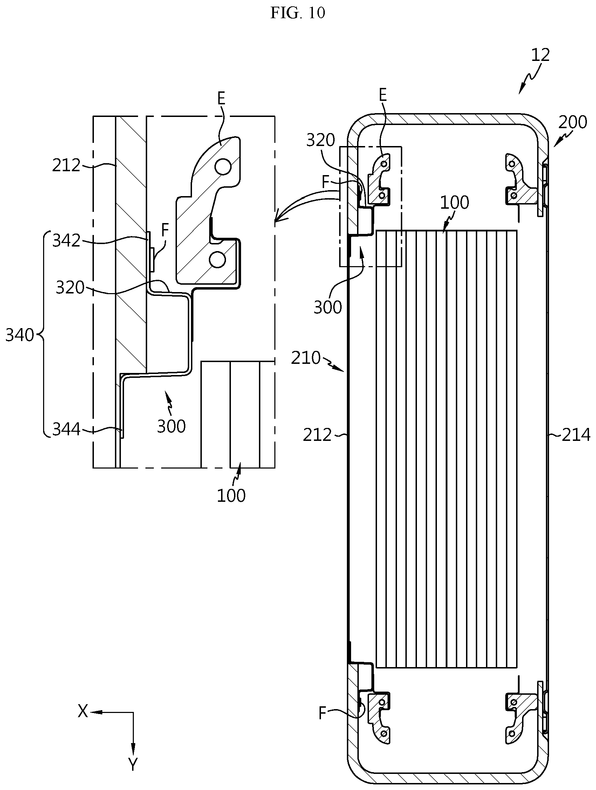

FIG. 10 is a diagram illustrating a battery pack 12 according to another embodiment of the present disclosure.

Since the battery pack 12 according to the present embodiment is similar to the battery pack 10 in the previous embodiment, redundant descriptions of elements that are substantially the same as or similar to those in the previous embodiment will be omitted, and hereinafter, a description will be made based on the differences from the previous embodiment.

Referring to FIG. 10, in the battery pack 12, the pack frame 200 may be configured such that a portion thereof facing the cell assembly 100 is thinner than other portions.

That is, in the battery pack 12 of this embodiment, the portion of the pack frame 200 facing the cell assembly 100 may be configured to be vulnerable. Accordingly, in the event of thermal runaway of the cell assembly 100, the stress due to the discharge pressure of venting gas may act stronger on the thinner portion of the pack frame 200 than on other portions of the pack frame 200.

Accordingly, when the internal pressure of the pack frame 200 increases, the gap between one side of the venting guidance portion 300 and the pack frame 200 may widen more quickly.

According to the battery pack 12 of this embodiment, the outlet S may be formed more easily in the pack frame 200 when the internal pressure of the pack frame 200 increases.

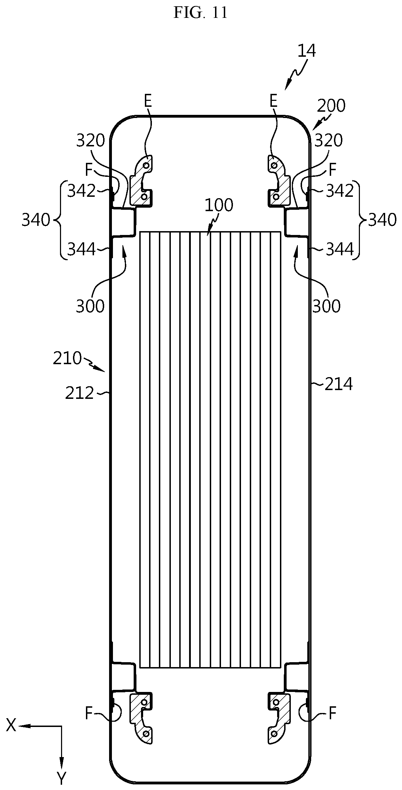

FIG. 11 is a diagram illustrating a battery pack 14 according to another embodiment of the present disclosure.

Since the battery pack 14 according to the present embodiment is similar to the battery pack 10 in the previous embodiment, redundant descriptions of elements that are substantially the same as or similar to those in the previous embodiment will be omitted, and hereinafter, a description will be made based on the differences from the previous embodiment.

Referring to FIG. 11, in the battery pack 14, the venting guidance portion 300 may be configured to be coupled to the front inner surface and the rear inner surface of the pack frame 200.

The battery pack 14 of this embodiment may be configured not to come into close contact with the wall of the installation space. Specifically, the venting guidance portion 300 may be coupled to both the inner surface of the front plate 212 and the inner surface of the rear plate 214 of the side plate 210 as shown in FIG. 11.

According to the battery pack 14 of this embodiment, the outlet S for discharging venting gas may be formed on both the front and rear sides of the battery pack 14 when the internal pressure of the pack frame 200 increases, so the venting gas may be more quickly discharged to the outside of the battery pack 14 in the event of thermal runaway of the cell assembly 100.

Meanwhile, the battery pack 10, 12, or 14 according to the present disclosure may further include, in addition to the cell assembly 100, various devices for controlling charging and discharging of the cell assembly 100, such as a BMS (Battery Management System), current sensors, fuses, and the like.

In addition, at least one battery pack 10, 12, or 14 according to the present disclosure may be provided as an energy source to form an energy storage system (ESS).

As described above, although the present disclosure has been described according to specific embodiments and drawings, the present disclosure is not limited thereto, and it is obvious to those skilled in the art to which the present disclosure pertains that various modifications and variations are able to be derived within the technical idea of the present disclosure and the scope of the claims described below.

Meanwhile, although terms indicating directions such as up, down, left, right, front, and back are used in this specification, it is obvious to those skilled in the art that these terms are only for convenience of explanation and may vary depending on the location of the target object or the location of the observer.

### [Description of Reference numerals]

10, 12, 14: Battery pack
100: Cell assembly
200: Pack frame
E: Support
300: Venting guidance portion
320: Body
340: Flange
342: First portion
344: Second portion
S: Outlet
400: Sealing member

## Claims

1. A battery pack comprising
a cell assembly;
a pack frame configured to accommodate the cell assembly therein; and
a venting guidance portion coupled to the pack frame and configured to cause an outlet, through which venting gas emitted from the cell assembly is discharged to the outside of the pack frame, to be formed at a coupling portion with the pack frame, which is at least partially weakened as the internal pressure of the pack frame increases due to the venting gas.

2. The battery pack according to claim 1,
wherein the venting guidance portion is configured to cause the pack frame to open outwards as the internal pressure of the pack frame increases.

3. The battery pack according to claim 2,
wherein the venting guidance portion is configured to cause the space between the cell assembly and the pack frame to become wider toward one side thereof when the pack frame opens outwards as the internal pressure of the pack frame increases.

4. The battery pack according to claim .1,
wherein the venting guidance portion is disposed between the pack frame and the cell assembly.

5. The battery pack according to claim 4,
wherein the venting guidance portion is configured to be located on at least one of both sides of the cell assembly between the pack frame and the cell assembly.

6. The battery pack according to claim 1,
wherein the bonding force between one side of the venting guidance portion and the pack frame is configured to be less than the bonding force between the other side of the venting guidance portion and the pack frame, and
wherein the venting guidance portion is configured to cause the outlet to be formed between one side of the venting guidance portion and the pack frame as the internal pressure of the pack frame increases.

7. The battery pack according to claim 6,
wherein the pack frame further comprises
a support configured to support one side of the venting guidance portion on the opposite side of the inner surface of the pack frame facing the cell assembly.

8. The battery pack according to claim 7,
wherein the venting guidance portion comprises:
a body coupled to the support; and
a flange extending from both sides of the body and coupled to the inner surface of the pack frame,
wherein the flange comprises:
a first portion extending from one side of the body; and
a second portion extending from the other side of the body, and
wherein the flange on one side of the venting guidance portion is configured such that the first portion is coupled to the inner surface of the pack frame and such that the second portion is not coupled to the inner surface of the pack frame.

9. The battery pack according to claim 8,
wherein the second portion is configured to be located closer to the cell assembly than the first portion.

10. The battery pack according to claim 1,
further comprising a sealing member configured to seal the gap between the top and the side of the pack frame and the gap between the bottom and the side of the pack frame,
wherein the sealing member is disposed to be spaced apart from the venting guidance portion in the vertical direction in the pack frame.

11. The battery pack according to claim 1,
wherein a portion of the pack frame facing the cell assembly is thinner than other portions.

12. An energy storage system comprising at least one battery pack according to any one of claims 1 to 11.
